# EUROPÄISCHE PATENTANMELDUNG

(11) **EP 4 721 994 A1**
(43) Veröffentlichungstag der Anmeldung: **08.04.2026**
(21) Anmeldenummer: 25201322.2
(22) Anmeldetag: 10.09.2025
(51) Int. Cl.: B60C 1/00, C08L 15/00

(54) **SCHWEFELVERNETZBARE KAUTSCHUKMISCHUNG UND FAHRZEUGREIFEN**

(30) Priorität: 30.09.2024 DE 102024209525
(71) Anmelder: Continental Reifen Deutschland GmbH, 30175 Hannover (DE)
(72) Erfinder: Weber, Christian, 30175 Hannover (DE); Huang, Menglong, 30175 Hannover (DE); Kallungal Abdul Jaleel, Muhamed Jesbeer, 30175 Hannover (DE); Courtois, Nicolas, 30175 Hannover (DE)
(74) Vertreter: Continental Corporation

(57) **Zusammenfassung**

Die Erfindung betrifft eine schwefelvernetzbare Kautschukmischung sowie einen Fahrzeugreifen.

Die schwefelvernetzbare Kautschukmischung, enthält wenigstens folgende Bestandteile:
- zumindest einen Dienkautschuk,
- 10 bis 500 phr zumindest einer Kieselsäure,
- zumindest ein Silan A mit der allgemeinen Summenformel A-I),

Z-SiR¹R²R³ A-I)

wobei die Reste R¹, R² und R³ gleich oder verschieden voneinander sein können und ausgewählt sind aus C₁-C₁₀-Alkoxygruppen,
und wobei Z eine Gruppe ist, die in der Kautschukmischung beim Mischen
und/oder Vulkanisieren eine Anbindung an den umgebenden Dienkautschuk ermöglicht,

- zumindest ein Silan B mit der allgemeinen Summenformel B-I),

R⁷-SiR⁴R⁵R⁶ B-I)

wobei die Reste R⁴, R⁵ und R⁶ gleich oder verschieden voneinander sein können und ausgewählt sind aus C₁-C₁₀-Alkoxygruppen,
und wobei R⁷ aus 2 bis 20 Kohlenstoffatomen besteht und die Kohlenstoffatome gesättigte und/oder aromatische Kohlenstoffatome sind,

wobei die Gesamtmenge an Silicium, welches aus den Silanen A und B stammt, in der Kautschukmischung 0,5 bis 1,1 phf beträgt
und wobei das Verhältnis von Silicium aus Silan A zum Silicium aus Silan B 1,5 :1 bis 4:1 beträgt.

## Beschreibung

Die Erfindung betrifft eine schwefelvernetzbare Kautschukmischung sowie einen Fahrzeugreifen, insbesondere Fahrzeugluftreifen, mit zumindest einem Bauteil, das aus einer solchen mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Dabei bestehen Zielkonflikte zwischen den meisten der bekannten Reifeneigenschaften wie Nassgriffverhalten, Bremsverhalten, Handling-Verhalten, Rollwiderstand, Wintereigenschaften, Abriebverhalten und Reißeigenschaften. Es wurden bereits vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt.

Um bei Fahrzeugreifen den Zielkonflikt zwischen Nassgriffverhalten und Rollwiderstand zu entschärfen, ist seit langem bekannt, Kieselsäure als Füllstoff in die Kautschukmischung von Laufstreifen von Fahrzeugreifen einzumischen. Um den positiven Effekt der Kieselsäure voll auszunutzen, ist es notwendig, dass sogenannte Silan-Kupplungsagenzien in der Mischung eingesetzt werden.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Mercaptosilane können auch in geblockter Form z. B. als 3-Octanoylthiopropyltriethoxysilan eingesetzt werden.

In der WO2019105602A1 werden Kautschukmischungen mit zwei unterschiedlichen Silanen beschrieben, wobei das Silan A ein Silan ist, welches über seine vorhandenen Gruppen eine Anbindung an Kieselsäure und an das umgebende Polymer ermöglicht, und das Silan B ein bifunktionelles Silan ist, welches keine Funktionalität aufweist, um an das umgebende Polymer anzubinden. Silan B weist an beiden Molekülseiten Si(R¹)ₒ-Gruppen auf.

Die DE 112013001965 B4 offenbart in den Tabellen Kautschukmischungen mit 3,3'-Bis(triethoxysilylpropyl)tetrasulfid (TESPT) (Haftverbesserer) und n-N-Octyltriethoxysilan (Si208) (Alkylsilan 2) in unterschiedlichen Mengen und Mengenverhältnissen.

Der vorliegenden Erfindung liegt nun die Aufgabe zugrunde, eine Kautschukmischung bereitzustellen, die im Vergleich zum Stand der Technik eine weitere Verbesserung im Eigenschaftsprofil umfassend Rollwiderstand und Nassgriff an Fahrzeugreifen aufweist. Gleichzeitig sollen Eigenschaften der Kautschukmischung, die für die Anwendung im Reifen von Vorteil sind, nicht beeinträchtigt oder sogar ebenfalls verbessert werden.

Gelöst wird diese Aufgabe durch eine Kautschukmischung, die die folgenden Bestandteile enthält:
- zumindest einen Dienkautschuk,
- 10 bis 500 phr zumindest einer Kieselsäure,
- zumindest ein Silan A mit der allgemeinen Summenformel A-I),

   Z-SiR¹R²R³ A-I)

   wobei die Reste R¹, R² und R³ gleich oder verschieden voneinander sein können und ausgewählt sind aus C₁-C₁₀-Alkoxygruppen,
   und wobei Z eine Gruppe ist, die in der Kautschukmischung beim Mischen und/oder Vulkanisieren eine Anbindung an den umgebenden Dienkautschuk ermöglicht,
- zumindest ein Silan B mit der allgemeinen Summenformel B-I),

   R⁷-SiR⁴R⁵R⁶ B-I)

   wobei die Reste R⁴, R⁵ und R⁶ gleich oder verschieden voneinander sein können und ausgewählt sind aus C₁-C₁₀-Alkoxygruppen,
   und wobei R⁷ aus 2 bis 20 Kohlenstoffatomen besteht und die Kohlenstoffatome gesättigte und/oder aromatische Kohlenstoffatome sind,
      wobei die Gesamtmenge an Silicium, welches aus den Silanen A und B stammt, in der Kautschukmischung 0,5 bis 1,1 phf (Gewichtsteile bezogen auf 100 Gewichtsteile Kieselsäure) beträgt
      und wobei das Verhältnis von Silicium aus Silan A zum Silicium aus Silan B 1,5 :1 bis 4:1 beträgt.

Überraschenderweise hat sich herausgestellt, dass mit der Kombination von speziellen Silanen in den über die Gesamtmenge an Silicium und das Verhältnis von Silicium definierten Mengen Mischungen erhalten werden, die beim Einsatz in Fahrzeugreifen zu einem verbesserten Rollwiderstand, bei verbessertem Nassgriff führt. Andere, für Reifen vorteilhafte Eigenschaften der Kautschukmischung, werden dabei nicht beeinträchtigt. Bei den speziellen Silanen handelt es dabei um ein Silan A, welches durch seinen molekularen Aufbau und seine Funktionalisierungen in der Kautschukmischung beim Mischen und/oder Vulkanisieren eine Anbindung an den umgebenden Dienkautschuk und die Kieselsäure ermöglicht, und ein Silan B, welches durch seinen molekularen Aufbau und seine Funktionalisierungen in der Kautschukmischung beim Mischen und/oder Vulkanisieren zwar über eine Funktionalisierung an einem Molekülende eine Anbindung an die Kieselsäure ermöglicht, durch eine unpolare, gesättigte und/oder aromatisch Gruppe (R⁷) am anderen Molekülende eine Anbindung an den Dienkautschuk jedoch nicht ermöglicht.

Die in dieser Schrift verwendete Angabe phf (parts per hundred parts of filler by weight) ist dabei die in der Kautschukindustrie gebräuchliche Mengenangabe für Kupplungsagenzien für polare Füllstoffe. Im Rahmen der vorliegenden Anmeldung bezieht sich phf auf das vorhandene Kieselsäure/Silika, das heißt, dass andere eventuell vorhandene Füllstoffe wie Ruß nicht in die Berechnung der Menge an Silan-Kupplungsagens mit eingehen.

Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die Dienkautschuk(e) ist bzw. sind dabei bevorzugt ausgewählt aus der Gruppe bestehend aus natürlichem Polyisopren (NR), synthetischem Polyisopren (IR), epoxidiertem Polyisopren (ENR), Butadien-Kautschuk (BR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Gemäß einer besonders bevorzugten Ausführungsform der Erfindung ist bzw. sind der bzw. die Dienkautschuk(e) ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Als Butadienkautschuk (Polybutadien, BR) können alle dem Fachmann bekannten Typen eingesetzt werden, sowohl high-cis- als auch low-cis-Typen. Die Butadienkautschuke können auch in funktionalisierter Form eingesetzt werden. Die Butadienkautschuke können dabei mit unterschiedlichsten Funktionalisierungen endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein. Es können unterschiedliche Butadienkautschuke im Verschnitt eingesetzt werden.

Sind in der Kautschukmischung lösungspolymerisierte Styrol-ButadienKautschuke (SSBR) vorhanden, können diese mit unterschiedlichsten Funktionalisierungen (Modifizierungen), endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein.

Die erfindungsgemäße Kautschukmischung enthält 10 bis 500 phr, bevorzugt 50 bis 200 phr, Kieselsäure, um eine gute Verarbeitbarkeit bei guten Reifeneigenschaften zu erzielen.

Die einsetzbaren Kieselsäuren können auf unterschiedlichsten Kieselsäuren basieren, die beispielsweise durch Fällung aus flüssiger Phase oder pyrogen oder aus Reisschalen-Asche ("rice husk ash silica" (RHAS)) hergestellt werden. Vorzugsweise wird eine gefällte Kieselsäure eingesetzt.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 270 m²/g, aufweist. Als Kieselsäuren können sowohl konventionelle Kieselsäuren wie die des Typs VN3 der Firma Evonik als auch hoch dispergierbare Kieselsäuren, so genannte HD-Kieselsäuren (z. B. Ultrasil^{®} 7000 der Firma Evonik), zum Einsatz kommen.

Die erfindungsgemäße Kautschukmischung enthält zumindest ein Silan A mit der allgemeinen Summenformel A-I)

Z-SiR¹R²R³ A-I)

wobei die Reste R¹, R² und R³ gleich oder verschieden voneinander sein können und ausgewählt sind aus C₁-C₁₀-Alkoxygruppen,
und wobei Z eine Gruppe ist, die in der Kautschukmischung beim Mischen und/oder Vulkanisieren eine Anbindung an den umgebenden Dienkautschuk ermöglicht. Es können auch mehrere Silane dieses Typs in der Mischung vorhanden sein.

Bei den Gruppen Z, die in der Kautschukmischung beim Mischen und/oder Vulkanisieren eine Anbindung an den umgebenden Dienkautschuk ermöglichen, kann es sich um unterschiedliche Gruppen handeln. Zu diesen Gruppen zählen reaktive Schwefel-Gruppierungen, wie insbesondere eine Sx-Gruppierung (mit x > oder gleich 2) oder eine Mercapto-Gruppen S-H oder geblockte S-SG-Gruppierungen, wobei SG für Schutzgruppe steht, sodass das Silan durch Reaktion der Sx- oder S-H-Gruppierung oder der S-SG-Gruppierung nach Entfernen der Schutzgruppe bei der Schwefelvulkanisation an Polymere anbinden kann.

Das zweite Silan B hingegen weist gemäß Formel B-I)

R⁷-SiR⁴R⁵R⁶ B-I)

keine Gruppe auf, die eine Anbindung an den umgebenden Dienkautschuk beim Mischen und/oder Vulkanisieren ermöglicht, da R⁷ aus 2 bis 20 Kohlenstoffatomen besteht und die Kohlenstoffatome gesättigte und/oder aromatische Kohlenstoffatome sind. Es weist nur eine Silylgruppe auf, die eine Anbindung an Kieselsäure ermöglicht. Es können auch mehrere Silane dieses Typs in der Mischung vorhanden sein.

Wichtig ist, dass gemäß der Erfindung die Gesamtmenge an Silylgruppen aus den Silanen A und B definiert über die Mengen an Silicium aus den Silanen 0,5 bis 1,1 phf (Gewichtsteile bezogen auf 100 Gewichtsteile Kieselsäure), bevorzugt 0,6 bis 1,0 phf, besonders bevorzugt 0,7 bis 0,9 phf, beträgt. Die Anzahl an Gruppen, die eine Anbindung an Kieselsäure ermöglichen sollte für eine optimales Eigenschaftsprofil im Hinblick auf Rollwiderstand und Nassgriff nicht höher gewählt werden.

Hinzukommt, dass gemäß der Erfindung das Verhältnis von Silicium aus Silan A zum Silicium aus Silan B 1,5 :1 bis 4:1, vorzugsweise 2:1 bis 3:1, beträgt. Es ist demnach immer mehr Silylgruppen aus Silan A als aus Silan B in der Mischung vorhanden. Bei Einsatz von anderen Verhältnissen kann es zu einer Verschlechterung des Nassgriffs kommen.

Als besonders vorteilhaft hat es sich erwiesen, wenn die Reste R¹, R², R³, R⁴, R⁵ und R⁶ Ethoxygruppen sind. Diese Gruppen ermöglichen nach Abspaltung von Ethanol eine Anbindung an die oberflächlichen Silanolgruppen der Kieselsäure. Derartige Silane lassen sich zudem einfach kommerziell herstellen.

Besonders gute Ergebnisse im Hinblick auf Rollwiderstand und Nassgriff wurden erzielt, wenn das Silan A 3,3'-Bis(triethoxysilylpropyl)tetrasulfid (TESPT) und/oder 3,3'-Bis(triethoxysilylpropyl)disulfid (TESPD) ist.

Gemäß einer vorteilhaften Weiterbildung der Erfindung ist das Silan B N-Octyltriethoxysilan, welches sich besonders gut in der Mischung dispergieren lässt und durch seinen hohen hydrophoben Anteil gut mit der umgebenden Kautschukmatrix kompatibel ist.

Um einen niedrigen Rollwiderstand und verbesserten Nassgriff ohne wesentliche Einbußen im Abrieb und um Trockenbremsen zu erzielen, ist es bevorzugt, wenn die Kautschukmischung als Silan A A 3,3'-Bis(triethoxysilylpropyl)tetrasulfid (TESPT) und/oder 3,3'-Bis(triethoxysilylpropyl)disulfid (TESPD) und als Silan B N-Octyltriethoxysilan enthält.

Neben den bereits genannten Inhaltsstoffen kann die Kautschukmischung weitere Zuschlagstoffe enthalten, die im Folgenden genannt werden.

Die Kautschukmischung kann weitere Füllstoffe, wie Ruße, Alumosilicate, Kreide, Stärke, Magnesiumoxid, Titandioxid, Kautschukgele, Kohlenstoffnanoröhrchen, Graphit, Graphene oder sogenannte "carbon-silica dual-phase filler" in üblichen Mengen enthalten, wobei die Füllstoffe in Kombination eingesetzt werden können.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren bei guten sonstigen Reifeneigenschaften erzielt.

Die erfindungsgemäße Kautschukmischung kann des Weiteren unterschiedliche Weichmacher enthalten. Diese sind bevorzugt in Mengen bis zu 70 phr in der Mischung enthalten.

Als Weichmacher können beispielsweise solche eingesetzt werden, die ausgewählt sind aus der Gruppe bestehend aus Weichmachern aus nachwachsenden Rohstoffen wie Rapsöl oder Sonnenblumenöl, Mineralölen, Phosphorsäureestern wie Tri-(2-ethylhexyl)phosphat, und Flüssig-Polymeren mit einem Gewichtsmittel der Molekulargewichtsverteilung Mw gemäß GPC von 60.000 g/mol oder weniger. Vorzugsweise werden DAE (Destillated Aromatic Extracts), RAE (Residual Aromatic Extract), TDAE (Treated Destillated Aromatic Extracts), MES (Mild Extracted Solvents), Rapsöl und/oder flüssige Dien-Polymere eingesetzt.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Harze, wie z. B. Terpenharze,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) und/oder N,N'-Diphenylguanidin (DPG).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Die Herstellung der Kautschukmischung erfolgt nach den in der Kautschukindustrie üblichen Verfahren, in dem in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden.

Vorzugsweise wird sie in Fahrzeugreifen, insbesondere Fahrzeugluftreifen, eingesetzt, mit zumindest einem Bauteil, das aus der mit Schwefel vulkanisierten, erfindungsgemäßen Kautschukmischung besteht. Sie kann auch in mehreren unterschiedlichen Bauteilen von Fahrzeugreifen zum Einsatz kommen. Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Vorzugsweise handelt es sich um einen Fahrzeugluftreifen, wie PKW-, Van-, LKW- oder Zweiradreifen, verwendet, mit Laufstreifen, dessen zumindest mit der Fahrbahn in Berührung kommender Teil aus der mit Schwefel vulkanisierten, erfindungsgemäßen Kautschukmischung besteht.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die erfindungsgemäße Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in den Tabellen 1 und 2 zusammengefasst sind, näher erläutert werden.

Die Vergleichsmischung ist dabei mit V, die erfindungsgemäße Mischungen ist mit E gekennzeichnet.

Die in der Tabelle 1 angegebene Einheit phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus den Fertigmischungen wurden Laufstreifen extrudiert, die bei Fahrzeugluftreifen üblichen Aufbaus der Dimension 215/55R17 verbaut wurden.

Mit diesen Reifen wurden die folgenden Reifentests durchgeführt:
- Nassbremsen: ABS-Bremsen aus 80 km/h, nasser Asphalt, niedriges µ = 0,79 (low µ), Lufttemperatur: 20-28 °C, Fahrbahntemperatur: 14-17 °C, Wassertiefe auf Fahrbahn: 0,8 mm
- Trockenbremsen: ABS-Bremsen aus 100 km/h, trockener Asphalt, hohes µ = 0,95 (high µ), Lufttemperatur: 20-27 °C, Fahrbahntemperatur: 19-40 °C
- Rollwiderstand: gemäß ISO 28580
- Abrieb: Gewichtsverlust der jeweiligen Reifen auf angetriebener Achse nach 8600 km Straßenfahrt, Durchschnittliche Lufttemperatur: 28 °C, 95 % trockene und 5 % nasse Straßen.

In der Tabelle 1 sind die Ergebnisse der Reifentests aufgeführt, wobei die Eigenschaften der Reifen mit der Mischung 1(V) gleich 100 % gesetzt wurden und Werte größer 100 % eine Verbesserung der entsprechenden Eigenschaft im Vergleich zu Reifen mit der Mischung 1(V) bedeuten. In den Mischungen wurden die Schwefelmengen angepasst, da aus dem TESPT ebenfalls Schwefel für die Bindung von Polymeren freigesetzt wird.

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| SSBR^{a} | phr | 30 | 30 | 30 | 30 |
| SSBR^{b} | phr | 60 | 60 | 60 | 60 |
| Ruß N339 | phr | 5 | 5 | 5 | 5 |
| Kieselsäure^{c} | phr | 90 | 90 | 90 | 90 |
| Weichmacher^{d} | phr | 35 | 35 | 35 | 35 |
| Alterungsschutzmittel | phr | 5,4 | 5,4 | 5,4 | 5,4 |
| Ozonschutzwachs | phr | 2 | 2 | 2 | 2 |
| Zinkoxid | phr | 2 | 2 | 2 | 2 |
| Stearinsäure | phr | 1 | 1 | 1 | 1 |
| Verarbeitungshilfsmittel | phr | 2 | 2 | 2 | 2 |
| Silan A^{e} | phr | 7,2 | 7,2 | 2,2 | 5,3 |
| Silan B^{f} | phr | - | 3 | 5,5 | 2,2 |
| Beschleuniger | phr | 4,2 | 4,2 | 4,2 | 4,2 |
| Schwefel | phr | 0,85 | 0,85 | 1,44 | 1,07 |

| **Reifeneigenschaften** | | | | | |
|---|---|---|---|---|---|
| Nassbremsen | % | 100 | 97,6 | 99,5 | 101,0 |
| Trockenbremsen | % | 100 | 99,1 | 99,9 | 99,4 |
| Rollwiderstand | % | 100 | 102,3 | 103,4 | 103,3 |
| Abrieb | % | 100 | 95,0 | 83,0 | 95,0 |

| | | | | | |
|---|---|---|---|---|---|
| ^{a} Sprintan^{®} SLR-4602, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -23 °C ^{b} Sprintan^{®} SLR-3402, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -59 °C ^{c} Ultrasil^{®} VN3 Evonik, BET-Oberfläche = 167-193 m²/g (gemessen mit Stickstoff), CTAB-Oberfläche = 157-177 m²/g; ^{d} TDAE (Treated Destillated Aromatic Extracts) ^{e} 3,3'-Bis(triethoxysilylpropyl)tetrasulfid (TESPT) ^{f} N-Octyltriethoxysilan, Dynasylan^{®} OCTEO, Evonik | | | | | |

Tabelle 2 gibt die Anteile an Silicium aus den Silanen in den Mischungen bezogen auf den Kautschuk (phr) und bezogen auf die Kieselsäure (phf) an. Ferner sind in der Tabelle 2 die Gesamtmengen an Silicium aus den beiden Silanen und das Verhältnis von Silicium aus Silan A zum Silicium aus Silan für die unterschiedlichen Mischungen angeben.

**Tabelle 2**

| | | **1(V)** | **2(V)** | **3(V)** | **4(E)** |
|---|---|---|---|---|---|
| TESPT (Mw = 539 g/mol) | phr | 7,2 | 7,2 | 2,2 | 5,3 |
| N-Octyltriethoxysilan OTS (Mw = 276,5 g/mol) | phr | | 3 | 5,5 | 2,2 |
| Triethoxysilylgehalt von TESPT | phr | 4,36 | 4,36 | 1,33 | 3,21 |
| Triethoxysilylgehalt von OTS | phr | 0,00 | 1,77 | 3,24 | 1,30 |
| Si-Gehalt von TESPT | phr | 0,75 | 0,75 | 0,23 | 0,55 |
| Si-Gehalt von OTS | phr | 0,00 | 0,30 | 0,56 | 0,22 |
| Si-Gehalt von TESPT | phf | 0,83 | 0,83 | 0,26 | 0,6 |
| Si-Gehalt von OTS | phf | 0,00 | 0,33 | 0,62 | 0,24 |
| Gesamtmenge an Si aus Silanen | phf | 0,83 | 1,16 | 0,88 | 0,84 |
| Verhältnis von Silicium aus Silan A zum Silicium aus Silan B | phf | - | 2,5 | 0,42 | 2,5 |

Aus den Daten der Tabelle 1 in Zusammenschau mit der Tabelle 2 wird ersichtlich, dass nur bei der Mischung 4(E) sowohl das Nassbremsen als auch der Rollwiderstand verbessert werden. Auch das Trockenbremsen und der Abrieb bleiben auf sehr hohem Niveau. Dabei müssen die speziellen Silane in den angegebenen Mengen und Mengenverhältnissen in der Mischung vorhanden sein. Überscheitet die Gesamtmenge an Silicium aus den Silanen beispielsweise den Wert von 1,1 phf, wie dies in der Mischung 2(V) der Fall ist, ist eine Verschlechterung des Nassbremsens zu beobachten. Liegen die entsprechenden Silane nicht im erfindungsgemäßen Verhältnis vor (definiert über das Verhältnis von Silicium aus Silan A zum Silicium aus Silan B), wie bei Mischung 3(V), ist auch hier keine Verbesserung des Nassbremsens zu beobachten und es sind starke Einbußen im Abrieb zu verzeichnen.

## Patentansprüche

1. Schwefelvernetzbare Kautschukmischung, enthaltend wenigstens folgende Bestandteile:
- zumindest einen Dienkautschuk,
- 10 bis 500 phr zumindest einer Kieselsäure,
- zumindest ein Silan A mit der allgemeinen Summenformel A-I),
Z-SiR¹R²R³ A-I)
wobei die Reste R¹, R² und R³ gleich oder verschieden voneinander sein können und ausgewählt sind aus C₁-C₁₀-Alkoxygruppen,
und wobei Z eine Gruppe ist, die in der Kautschukmischung beim Mischen und/oder Vulkanisieren eine Anbindung an den umgebenden Dienkautschuk ermöglicht,
- zumindest ein Silan B mit der allgemeinen Summenformel B-I),
R⁷-SiR⁴R⁵R⁶ B-I)
wobei die Reste R⁴, R⁵ und R⁶ gleich oder verschieden voneinander sein können und ausgewählt sind aus C₁-C₁₀-Alkoxygruppen,
und wobei R⁷ aus 2 bis 20 Kohlenstoffatomen besteht und die Kohlenstoffatome gesättigte und/oder aromatische Kohlenstoffatome sind,
wobei die Gesamtmenge an Silicium, welches aus den Silanen A und B stammt, in der Kautschukmischung 0,5 bis 1,1 phf (Gewichtsteile bezogen auf 100 Gewichtsteile Kieselsäure) beträgt
und wobei das Verhältnis von Silicium aus Silan A zum Silicium aus Silan B 1,5 :1 bis 4:1 beträgt.

2. Schwefelvernetzbare Kautschukmischung nach Anspruch 1, **dadurch gekennzeichnet, dass** die Reste R¹, R², R³, R⁴, R⁵ und R⁶ Ethoxygruppen sind.

3. Schwefelvernetzbare Kautschukmischung nach zumindest einem der vorherigen Ansprüche, **dadurch gekennzeichnet, dass** das Silan A 3,3'-Bis(triethoxysilylpropyl)tetrasulfid (TESPT) und/oder 3,3'-Bis(triethoxysilylpropyl)disulfid (TESPD) ist.

4. Schwefelvernetzbare Kautschukmischung nach zumindest einem der vorherigen Ansprüche, **dadurch gekennzeichnet, dass** das Silan B N-Octyltriethoxysilan ist.

5. Schwefelvernetzbare Kautschukmischung nach zumindest einem der vorherigen Ansprüche, **dadurch gekennzeichnet, dass** sie als Silan A A 3,3'-Bis(triethoxysilylpropyl)tetrasulfid (TESPT) und/oder 3,3'-Bis(triethoxysilylpropyl)disulfid (TESPD) und als Silan B N-Octyltriethoxysilan enthält.

6. Schwefelvernetzbare Kautschukmischung nach zumindest einem der vorherigen Ansprüche, **dadurch gekennzeichnet, dass** die Gesamtmenge an Silicium, welches aus den Silanen A und B stammt, in der Kautschukmischung 0,7 bis 0,9 phf (Gewichtsteile bezogen auf 100 Gewichtsteile Kieselsäure) beträgt.

7. Schwefelvernetzbare Kautschukmischung nach zumindest einem der vorherigen Ansprüche, **dadurch gekennzeichnet, dass** das Verhältnis von Silicium aus Silan A zum Silicium aus Silan B 2:1 bis 3:1 beträgt.

8. Schwefelvernetzbare Kautschukmischung nach zumindest einem der vorherigen Ansprüche, **dadurch gekennzeichnet, dass** sie 50 bis 200 phr Kieselsäure enthält.

9. Schwefelvernetzbare Kautschukmischung nach zumindest einem der vorherigen Ansprüche, **dadurch gekennzeichnet, dass** der oder die Dienkautschuk(e) ausgewählt ist bzw. sind aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

10. Fahrzeugreifen, insbesondere Fahrzeugluftreifen, mit zumindest einem Bauteil, das aus einer mit Schwefel vulkanisierten Kautschukmischung nach einem der Ansprüche 1 bis 9 besteht.

11. Fahrzeugluftreifen nach Anspruch 10 mit einem Laufstreifen, dessen zumindest mit der Fahrbahn in Berührung kommender Teil aus einer mit Schwefel vulkanisierten Kautschukmischung nach einem der Ansprüche 1 bis 9 besteht.
